# FASCICULE DE BREVET EUROPEEN

(11) **EP 4 222 017 B1**
(45) Date de publication et mention de la délivrance du brevet: **17.07.2024**
(21) Numéro de dépôt: 21772812.0
(22) Date de dépôt: 20.09.2021
(51) Int. Cl.: B60L 58/12, B60L 58/13, B60L 58/14, B60L 58/16, B60L 58/18

(54) **PROCÉDÉ DE GESTION D'UN RÉSEAU DE BATTERIES D'ACCUMULATEURS ET UNITÉ D'ALIMENTATION ÉLECTRIQUE D'UN MOTEUR**
VERFAHREN ZUR VERWALTUNG EINES NETZWERKS AUS SPEICHERBATTERIEN UND STROMVERSORGUNGSEINHEIT EINES MOTORS
METHOD FOR MANAGING A NETWORK OF STORAGE BATTERIES AND POWER SUPPLY UNIT OF AN ENGINE

(30) Priorité: 30.09.2020 FR 2009998
(43) Date de publication de la demande: 09.08.2023
(73) Titulaire: Ampere SAS, 92100 Boulogne-Billancourt (FR)
(72) Inventeur: AMEZIANI, Menouar, 78084 Guyancourt (FR); LASSARTESSES, Robert, 78084 Guyancourt Cedex (FR)
(86) Numéro de dépôt international: PCT/EP2021/075782
(87) Numéro de publication internationale: WO 2022/069276

(56) Documents cités:
- EP-A1- 3 490 099
- FR-A1- 2 942 086
- US-A1- 2012 083 948
- US-A1- 2012 268 070
- US-A1- 2018 086 222

## Description

### DOMAINE TECHNIQUE DE L'INVENTION

La présente invention concerne de manière générale les batteries d'accumulateurs d'un véhicule à propulsion électrique.

Elle concerne plus particulièrement un procédé de gestion d'un réseau de batteries d'accumulateurs adaptées à alimenter en courant électrique un moteur d'un véhicule automobile à propulsion électrique, ledit réseau comprenant une première batterie d'accumulateurs et au moins une deuxième batterie d'accumulateurs connectées en parallèle, chaque batterie d'accumulateurs étant connectée au reste du réseau par l'intermédiaire d'un relais qui permet d'isoler cette batterie d'accumulateurs de chaque autre batterie d'accumulateurs et qui est piloté par un calculateur, ledit procédé comprenant des étapes de :
- acquisition pour chaque batterie d'accumulateurs d'un état de charge,
- détermination, par le calculateur, d'une consigne de commande de chaque relais en fonction des états de charge acquis, et
- pilotage desdits relais sur la base de chaque consigne de commande déterminée.

L'invention concerne également une unité d'alimentation électrique d'un moteur.

### ETAT DE LA TECHNIQUE

Les véhicules automobiles à propulsion électrique sont équipés de batteries d'accumulateurs. L'autonomie de ces batteries d'accumulateurs est un paramètre important en vue de l'amélioration des performances du véhicule, en particulier en ce qui concerne la distance maximum qui pourra être parcourue.

Une première solution afin d'améliorer l'autonomie des batteries d'accumulateurs est d'augmenter leur capacité. Cependant, cela présente un inconvénient majeur qui est l'augmentation du poids embarqué dans le véhicule.

Une deuxième solution consiste à utiliser de façon particulière plusieurs batteries élémentaires (ci-après appelées bloc-batterie) pour alimenter le véhicule à propulsion électrique.

Dans ce contexte, le document EP3497776 décrit une unité d'alimentation permettant d'alimenter un moteur électrique d'un véhicule électrique. Cette unité d'alimentation comprend plusieurs blocs-batteries interconnectés. Chaque bloc-batterie peut être ajouté à une combinaison de blocs-batteries et retiré séparément.

D'après ce document, une unité de commande permet de gérer les connexions et déconnexions de chaque bloc-batterie en considérant le niveau de charge (ou SOC pour « *State of Charge* » selon l'acronyme d'origine anglo-saxonne couramment utilisé) de chaque bloc-batterie. Plus précisément, l'unité de commande contrôle l'ensemble des blocs-batteries par l'intermédiaire d'éléments de commutation de manière à maintenir le même niveau de charge pour chaque bloc-batterie pendant les cycles de charge et de décharge pour l'alimentation du moteur électrique.

Le document US2012/083948 A1 divulgue un système de contrôle des connexions et déconnexions de blocs-batteries pour l'alimentation d'un moteur de véhicule électrique; ce système tient compte aussi seulement du SOC de chaque bloc-batterie pour la gestion des connexions.

Cependant, on constate qu'en utilisant tels procédés ou techniques, l'autonomie des blocs batteries se trouve plus réduite qu'espérée.

### PRESENTATION DE L'INVENTION

La présente invention propose d'améliorer la méthode de gestion du réseau de batteries élémentaires utilisées pour l'alimentation d'un véhicule à propulsion électrique.

Plus particulièrement, on propose selon l'invention un procédé de gestion d'un réseau de batteries d'accumulateurs adaptées à alimenter en courant électrique un moteur d'un véhicule automobile à propulsion électrique tel que défini en introduction dans lequel:
- à l'étape d'acquisition, le calculateur acquiert la valeur d'un premier paramètre relatif au niveau d'usure de chaque batterie d'accumulateurs, et
- à l'étape de détermination, chaque consigne de commande est déterminée en fonction de la valeur dudit premier paramètre.

Ainsi, grâce à l'invention, la ou les batteries d'accumulateurs permettant d'alimenter le moteur sont choisies en fonction de leur état de charge mais également en fonction du niveau d'usure de chaque batterie d'accumulateurs. Ainsi, l'utilisation des différentes batteries d'accumulateurs se base sur un compromis entre leur état de charge et leur niveau d'usure. Cela permet alors de préserver la capacité de chaque batterie d'accumulateurs et également son autonomie puisqu'aucune batterie d'accumulateurs n'est plus utilisée que les autres.

D'autres caractéristiques avantageuses et non limitatives du procédé de gestion du réseau de batteries d'accumulateurs conforme à l'invention, prises individuellement ou selon toutes les combinaisons techniquement possibles, sont les suivantes :
- la détermination de la consigne de commande est mise en oeuvre par le calculateur au moyen d'un réseau de neurones artificiels, en fournissant en entrée dudit réseau de neurones artificiels lesdits états de charge ainsi que la valeur du premier paramètre acquis, ladite consigne de commande étant obtenue en sortie dudit réseau de neurones artificiels ;
- il est prévu :
   - à l'étape d'acquisition, le calculateur acquiert la valeur d'au moins un second paramètre choisi parmi la tension aux bornes de chaque batterie d'accumulateurs, la température de chaque batterie d'accumulateurs et une configuration d'avancement du véhicule automobile, et
   - à l'étape de détermination, chaque consigne de commande est déterminée en fonction de la valeur de chaque second paramètre ;
- le second paramètre étant la configuration d'avancement du véhicule automobile, lorsque la configuration d'avancement du véhicule automobile correspond à une phase d'accélération dudit véhicule automobile, la consigne de commande prescrit la fermeture du relais associé à la batterie d'accumulateurs dont l'état de charge est le plus élevé et l'ouverture de chaque autre relais, pour autant que le premier paramètre indique que le niveau d'usure de cette batterie d'accumulateurs est inférieur à celui de chaque autre batterie d'accumulateurs ;
- le second paramètre étant la configuration d'avancement du véhicule automobile, lorsque la configuration d'avancement du véhicule automobile déterminée correspond à une phase de freinage dudit véhicule automobile, la consigne de commande prescrit la fermeture du relais associé à la batterie d'accumulateurs dont l'état de charge déterminé est le plus faible et l'ouverture de chaque autre relais, pour autant que le premier paramètre indique que le niveau d'usure de cette batterie d'accumulateurs est inférieur à celui de chaque autre batterie d'accumulateurs ;
- la consigne de commande prescrit la fermeture des relais associés à chacune des deux batteries d'accumulateurs simultanément lorsque les tensions à leurs bornes sont sensiblement égales ; et
- il est également prévu, après usage du véhicule automobile, une étape de détermination, par le calculateur, d'une consigne de charge, sur un réseau électrique extérieur, de la batterie d'accumulateurs dont l'état de charge déterminé est le plus faible, pour autant que le premier paramètre indique que le niveau d'usure de cette batterie d'accumulateurs est inférieur à celui de chaque autre batterie d'accumulateurs.

L'invention concerne également une unité d'alimentation électrique d'un moteur dans un véhicule automobile à propulsion comprenant :
- une première batterie d'accumulateurs,
- au moins une seconde batterie d'accumulateurs,
- un calculateur adapté à mettre en oeuvre le procédé de gestion du réseau de batteries d'accumulateurs tel que défini précédemment.

Dans cette unité d'alimentation, une seule des deux batteries d'accumulateurs est raccordée à un convertisseur de courant continu. En variante, les deux batteries d'accumulateurs sont chacune raccordées à un convertisseur de courant continu distinct. En variante encore, les deux batteries d'accumulateurs sont chacune raccordées à un unique convertisseur de courant continu.
Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est un exemple de véhicule automobile comprenant une unité d'alimentation conforme à l'invention ;
[Fig. 2] représente un premier exemple d'unité d'alimentation conforme à l'invention ;
[Fig. 3] représente un deuxième exemple d'unité d'alimentation conforme à l'invention ;
[Fig. 4] représente un troisième exemple d'unité d'alimentation conforme à l'invention ;
[Fig. 5] représente un quatrième exemple d'unité d'alimentation conforme à l'invention ; et
[Fig. 6] représente, sous forme de logigramme, un exemple de procédé de gestion du réseau de batteries d'accumulateurs conforme à l'invention.

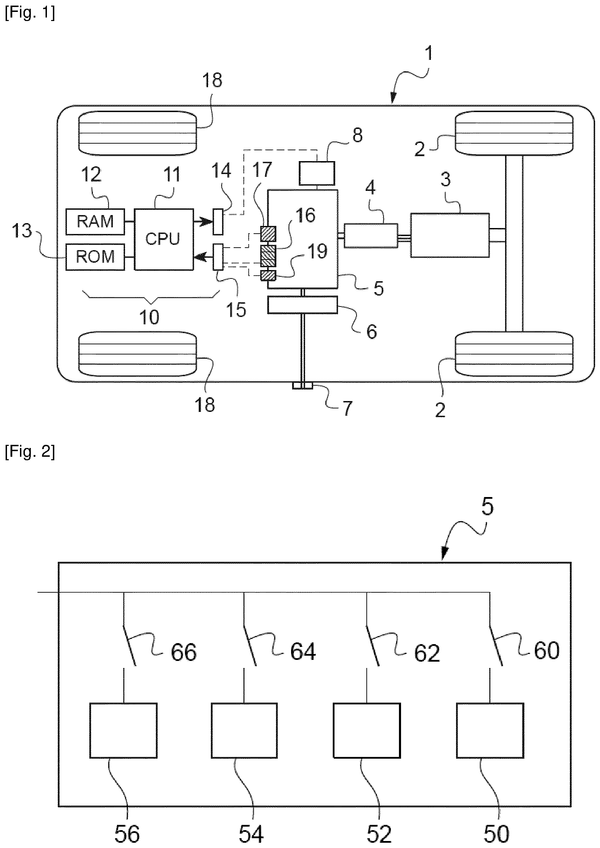

Sur la figure 1, on a représenté très schématiquement un véhicule automobile 1 qui comporte deux roues motrices 2 et deux roues non-motrices 18.

Il s'agit ici d'un véhicule électrique. En variante, il pourrait également s'agir d'un véhicule hybride.

Le véhicule automobile 1 représenté sur la figure 1 comporte donc un moteur électrique 3 permettant d'entraîner les deux roues motrices 2 en rotation.

Il comporte également une unité d'alimentation 5 qui permet d'alimenter ce moteur électrique 3 en courant, via un onduleur 4. Cette unité d'alimentation 5, décrite plus en détails par la suite, comprend une pluralité de batteries d'accumulateurs 50, 52, 54, 56. Classiquement, l'onduleur 4 est conçu pour transformer le courant continu débité par l'unité d'alimentation 5 en un courant triphasé.

Le véhicule automobile 1 comporte aussi un chargeur 6 équipé d'une prise de courant 7 qui est accessible à l'usager pour y brancher une fiche électrique connectée à un réseau électrique extérieur. Ce chargeur 6 est alors prévu pour réguler le courant issu du réseau électrique extérieur afin de charger au mieux l'unité d'alimentation 5.

Le véhicule automobile 1 comporte par ailleurs des moyens de contrôle 8 de paramètres de l'unité d'alimentation 5.

Ces moyens de contrôle 8 sont connectés à cet effet un moyen de mesure 17 de la température T de chaque batterie d'accumulateurs 50, 52, 54, 56 de l'unité d'alimentation 5, et un moyen d'acquisition 16 d'un état de charge SOC de chaque batterie d'accumulateurs 50, 52, 54, 56 de l'unité d'alimentation 5.

Le moyen de mesure 17 peut classiquement se présenter sous la forme de sondes de température implantées à l'intérieur de chaque batterie d'accumulateurs 50, 52, 54, 56 de l'unité d'alimentation 5.

Le moyen d'acquisition 16 est quant à lui prévu pour déterminer l'état de charge SOC de chaque batterie d'accumulateurs 50, 52, 54, 56 de l'unité d'alimentation 5, sur la base par exemple de la tension aux bornes de chaque batterie d'accumulateurs 50, 52, 54, 56. Il acquiert ici un état de charge SOC, qui s'exprime en pourcentage, pour chaque batterie d'accumulateurs 50, 52, 54, 56.

Cet état de charge SOC est considéré égal à 100% lorsque la batterie d'accumulateurs 50, 52, 54, 56 correspondante est complètement chargée. Il décroît lorsque la batterie d'accumulateurs 50, 52, 54, 56 concernée alimente le moteur électrique 3 en courant. Il croît lorsque la batterie d'accumulateurs 50, 52, 54, 56 concernée est alimentée par le chargeur 6.

Le véhicule automobile 1 comporte également un moyen de mesure 19 de la tension aux bornes de chaque batterie d'accumulateurs 50, 52, 54, 56 de l'unité d'alimentation

5.

Pour piloter ses différents organes, le véhicule automobile 1 comporte un calculateur 10 qui comprend un processeur 11 (CPU), une mémoire vive 12 (RAM), une mémoire morte 13 (ROM) et différentes interfaces d'entrée 15 et de sortie 14.

Grâce à ses interfaces d'entrée 15, le calculateur 10 est adapté à recevoir des signaux d'entrée provenant des moyens de mesure 17, 19 et d'acquisition 16. Il est ainsi adapté à acquérir la température T et l'état de charge SOC de chaque batterie d'accumulateurs 50, 52, 54, 56 de l'unité d'alimentation 5.

Le calculateur 10 est également adapté à déduire, sur la base des données issues des précédentes utilisations du véhicule automobile 1 et mémorisées dans l'une de ses mémoire, d'autres paramètres caractérisant chaque batterie d'accumulateurs 50, 52, 54, 56 de l'unité d'alimentation 5.

Par exemple, le calculateur 10 détermine notamment un paramètre relatif au niveau d'usure de chaque batterie d'accumulateurs 50, 52, 54, 56. Ce paramètre relatif au niveau d'usure de chaque batterie d'accumulateurs correspond par exemple à l'état de santé SOH (ou « *State of Health* ») de chaque batterie d'accumulateurs 50, 52, 54, 56 de l'unité d'alimentation 5. L'état de santé SOH s'exprime en pourcentage.

Pour chaque batterie d'accumulateurs 50, 52, 54, 56, cet état de santé SOH est considéré égal à 100% au moment de la fabrication de la batterie d'accumulateurs 50, 52, 54, 56. Il décroît au fur et à mesure de l'utilisation de la batterie d'accumulateurs 50, 52, 54, 56.

En variante, le paramètre relatif au niveau d'usure de chaque batterie d'accumulateurs 50, 52, 54, 56 pourrait correspondre à l'âge de chaque batterie d'accumulateurs 50, 52, 54, 56, au temps d'utilisation de chaque batterie d'accumulateurs 50, 52, 54, 56 ou encore au nombre de cycles de charge et décharge de chaque batterie d'accumulateurs 50, 52, 54, 56. Toutes ces données sont mémorisées dans l'une des mémoires du calculateur 10.

Les figures 2 à 5 représentent différents modes de réalisation de l'unité d'alimentation 5.

Comme précisément précédemment, l'unité d'alimentation 5 comprend une pluralité de batteries d'accumulateurs 50, 52, 54, 56. Plus précisément ici, sur les exemples des figures 2 à 5, l'unité d'alimentation 5 comprend quatre batteries d'accumulateurs 50, 52, 54, 56 : une batterie principale 50 et trois batteries auxiliaires 52, 54, 56.

Ici, la batterie principale 50 ne peut être retirée de l'unité d'alimentation 5 tandis que chacune des batteries auxiliaires 52, 54, 56 est amovible par rapport à l'unité d'alimentation 5 (de préférence sans outil). Cela peut notamment permettre de retirer du véhicule et transporter les batteries auxiliaires 52, 54, 56 afin de les recharger sur un réseau électrique extérieur comme celui d'une habitation, sans utiliser le chargeur 6.

Chacune des batteries d'accumulateurs 50, 52, 54, 56 est branchée en parallèle des autres.

Comme cela est visible sur les figures 2 à 5, chaque batterie d'accumulateurs 50, 52, 54, 56 est connectée à un relais 60, 60a, 60b, 62, 62a, 62b, 64, 64a, 64b, 66, 66a, 66b qui permet d'isoler chaque batterie d'accumulateurs 50, 52, 54, 56 des autres. Chaque relais 60, 60a, 60b, 62, 62a, 62b, 64, 64a, 64b, 66, 66a, 66b est indépendamment piloté par le calculateur 10 de manière à connecter l'une ou plusieurs des batteries d'accumulateurs 50, 52, 54, 56 au moteur électrique 3.

Dans le mode de réalisation de la figure 2, l'unité d'alimentation 5 comporte uniquement ces batteries d'accumulateurs et ces relais.

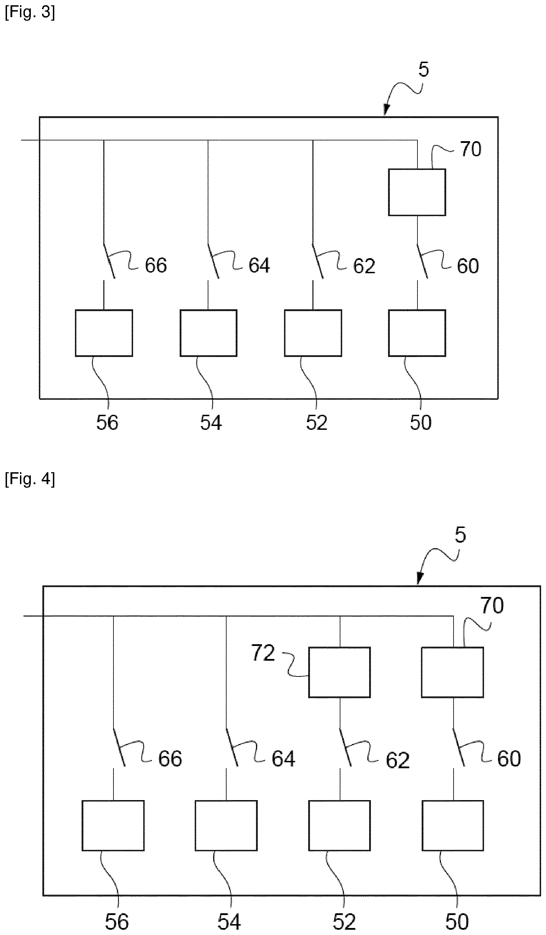

Dans les modes de réalisation représentés sur les figures 3 à 5, elle comprend également au moins un convertisseur de courant de continu 70, 72.

Plus précisément, dans la mode de réalisation illustré sur la figure 3, une seule batterie d'accumulateurs, ici la batterie principale 50, est reliée à un unique convertisseur de courant continu 70.

En variante, plusieurs batteries d'accumulateurs, toutes ou seulement quelques unes, peuvent être raccordées à un ou plusieurs convertisseurs de courant continu.

Ainsi, dans le mode de réalisation illustré sur la figure 4, deux premières des quatre batteries d'accumulateurs 50, 52 sont connectées en série avec deux convertisseurs de courant continu 70, 72 distincts. Dans ce mode, les deux autres batteries d'accumulateurs 54, 56 sont connectées en parallèle de chacun des ensembles formées par l'une des deux premières batteries d'accumulateurs 50, 52 et par le convertisseur de courant continu 70, 72 qui lui est associé.

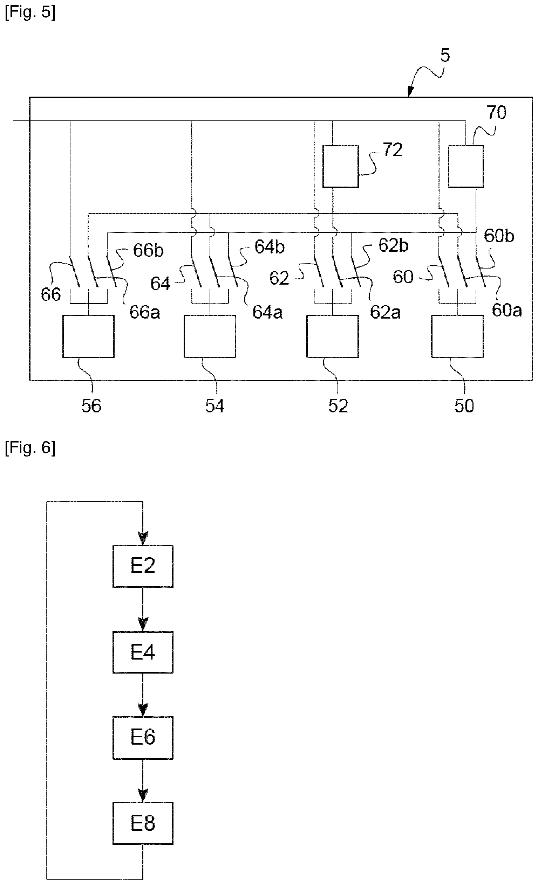

Dans le mode de réalisation illustré sur la figure 5, toutes les batteries d'accumulateurs 50, 52, 54, 56 sont adaptées à être connectées à un convertisseur de courant continu. Comme cela est visible sur cette figure 5, il n'est pas nécessaire d'intégrer autant de convertisseurs de courant continu qu'il y a de batteries d'accumulateurs. Une pluralité de relais 60, 60a, 60b, 62, 62a, 62b, 64, 64a, 64b, 66, 66a, 66b sont ici utilisés pour raccorder chaque batterie d'accumulateurs 50, 52, 54, 56 aux différents convertisseurs de courant continu.

Plus précisément ici, chaque batterie d'accumulateurs 50, 52, 54, 56 est adaptée soit à être connectée directement à l'onduleur 4 (comme dans le cas de la figure 2) via les relais 60, 62, 64, 66, soit à être connectée à l'onduleur 4 via les convertisseurs de courant continu 70, 72 et au moyen des relais 60a, 60b, 62a, 62b, 64a, 64b, 66a, 66b. Dans ce dernier cas, chaque batterie d'accumulateurs 50, 52, 54, 56 est alors connectée en série avec l'un des convertisseurs de courant continu 70, 72.

Dans ces différents modes de réalisations, le convertisseur de courant continu 70, 72 est utilisé comme un adaptateur de la tension issue de la ou des batteries d'accumulateurs 50, 52, 54, 56 à laquelle (ou lesquelles) ce convertisseur 70, 72 est connecté.

En pratique, dans le mode de réalisation de la figure 2, afin de pouvoir alimenter le moteur électrique 3 à partir de plusieurs batteries d'accumulateurs 50, 52, 54, 56, la tension aux bornes de chaque batteries d'accumulateurs 50, 52, 54, 56 doit être sensiblement égale.

Dans les modes de réalisation illustré sur les figures 3 à 5, le convertisseur de courant continu permet alors d'adapter la tension issue de la batterie d'accumulateurs 50, 52, 54, 56 à laquelle il est connecté afin que cette tension soit sensiblement égale à celle d'une autre batterie d'accumulateurs 50, 52, 54, 56 afin qu'au moins deux batteries d'accumulateurs 50, 52, 54, 56 soit connectée simultanément.

De manière avantageuse ici, l'utilisation d'un convertisseur de courant continu permet alors de raccorder simultanément au moins deux batteries d'accumulateurs 50, 52, 54, 56 même si les tensions aux bornes de chaque batterie d'accumulateurs 50, 52, 54, 56 sont sensiblement différentes.

Par exemple, dans le cas de la figure 3, la batterie principale 50 peut être connectée en parallèle de n'importe quelle autre batterie auxiliaire 52, 54, 56, quelle que soit la tension aux bornes de cette dernière. Cela permet en particulier de fournir davantage de puissance pour alimenter le moteur électrique 3 par rapport au mode de réalisation représenté sur la figure 2.

L'avantage du mode de réalisation représenté sur la figure 4 est qu'il permet de connecter simultanément jusqu'à trois batteries d'accumulateurs 50, 52, 54, 56.

Enfin, la dernière configuration (figure 5) permet le raccordement d'au minimum trois des batteries d'accumulateurs 50, 52, 54 simultanément pour alimenter le moteur électrique 3. Cette configuration permet plus de souplesse dans la gestion des batteries utilisées par rapport par exemple à la configuration représentée sur la figure 4 car elle permet de sélectionner plus facilement la ou les batteries d'accumulateurs 50, 52, 54, 56 à connecter afin d'alimenter le moteur électrique 3. Cette dernière configuration est particulièrement adaptée dans le cas où l'unité d'alimentation 5 comprend plus de quatre batteries d'accumulateurs (par exemple six ou huit batteries d'accumulateurs).

Le processeur 11 du calculateur 10 est adapté à mettre en oeuvre un procédé de gestion du réseau de batteries d'accumulateurs 50, 52, 54, 56 de l'unité d'alimentation 5 afin d'alimenter le moteur électrique 3 en courant électrique.

Plus particulièrement, grâce à un logiciel installé dans sa mémoire morte 13, le calculateur 10 est adapté à piloter chaque relais 60, 60a, 60b, 62, 62a, 62b, 64, 64a, 64b, 66, 66a, 66b associé à chaque batterie d'accumulateurs 50, 52, 54, 56 afin d'alimenter le moteur électrique 3.

La figure 6 représente, sous forme de logigramme, un exemple de procédé de gestion du réseau de batteries d'accumulateurs mis en oeuvre par le calculateur 10. Préalablement à la description des différentes étapes du procédé de gestion, il est nécessaire de préciser que ce procédé est mis en oeuvre par le calculateur 10 en boucle tout au long de l'utilisation du véhicule automobile 1.

Comme le montre la figure 6, le procédé débute à l'étape E2 lors de laquelle le calculateur 10 acquiert l'état de charge SOC de chaque batterie d'accumulateurs 50, 52, 54, 56.

Lors de cette étape, le calculateur 10 acquiert également la valeur d'au moins un paramètre relatif au niveau d'usure de chaque batterie d'accumulateurs 50, 52, 54, 56. Préférentiellement, le calculateur 10 détermine ici l'état de santé SOH de chaque batterie d'accumulateurs 50, 52, 54, 56.

A l'étape E2, le calculateur 10 détermine éventuellement aussi la valeur d'au moins un autre paramètre relatif au niveau d'usure de chaque batterie d'accumulateurs 50, 52, 54, 56. Par exemple, il détermine l'âge de chaque batterie d'accumulateurs 50, 52, 54, 56 ou encore le nombre de cycles de charge et décharge observés par chaque batterie d'accumulateurs 50, 52, 54, 56.

Il détermine également la température de chaque batterie d'accumulateurs 50, 52, 54, 56 grâce au moyen de mesure 17 et la tension aux bornes de chaque batterie d'accumulateurs 50, 52, 54, 56 grâce au moyen de mesure 19.

A l'issue de cette étape E2, la calculateur 10 mémorise donc ces paramètres caractérisant chaque batterie d'accumulateurs 50, 52, 54, 56.

Le procédé se poursuit à l'étape E4 au cours de laquelle le calculateur 10 détermine la configuration d'avancement du véhicule automobile 1. Par configuration d'avancement, on entend ici l'état de déplacement du véhicule automobile 1, c'est-à-dire que le calculateur 10 détermine si le véhicule automobile 1 est dans une phase d'accélération ou une phase de freinage ou une phase d'avancement stable ou encore une phase d'arrêt avec arrêt du moteur électrique 3 (par exemple, lors du stationnement du véhicule automobile 1, après utilisation de celui-ci).

Sur la base des différents paramètres acquis et de la configuration d'avancement du véhicule automobile 1, le calculateur 10 dispose d'une photographie de l'état des batteries d'accumulateurs 50, 52, 54, 56 et de l'avancement courant du véhicule automobile 1 afin de déterminer comment gérer le réseau de batteries et donc comment alimenter au mieux le moteur électrique 3.

Plus précisément, en fonction des données acquises à l'étape E2, le calculateur 10 détermine une consigne de commande de chaque relais 60, 60a, 60b, 62, 62a, 62b, 64, 64a, 64b, 66, 66a, 66b associé à chaque batterie d'accumulateurs 50, 52, 54, 56 (étape E6). De manière préférentielle ici, le calculateur 10 détermine la consigne de commande sur la base de l'état de charge et des paramètres relatifs au niveau d'usure de chaque batterie d'accumulateurs 50, 52, 54, 56 déterminés.

En pratique, la détermination de la consigne de commande est basée sur l'implémentation d'un réseau de neurones artificiels. Les états de charge SOC de chaque batterie d'accumulateurs 50, 52, 54, 56, les températures de chaque batterie d'accumulateurs 50, 52, 54, 56, les tensions aux bornes de chaque batterie d'accumulateurs 50, 52, 54, 56, ainsi que tous les paramètres relatifs au niveau d'usure de chaque batterie d'accumulateurs 50, 52, 54, 56 sont fournis en entrée de ce réseau de neurones artificiels. La consigne de commande de chaque relais 60, 60a, 60b, 62, 62a, 62b, 64, 64a, 64b, 66, 66a, 66b est alors obtenue en sortie du réseau de neurones artificiels.

Plus exactement ici, le réseau de neurones artificiels aura comme entrées les données instantanées que sont les tensions, les courants débités par les batteries, les états de charge SOC, les temps d'utilisation (c'est-à-dire l'âge des batteries). Il utilisera également en entrée une partie au moins des sorties de ce réseau de neurones (notamment les états de santé SOH des batteries). Le réseau de neurones fournira en sortie les états de santé SOH des batteries, ainsi que les consignes de commande des relais.

La configuration de ce réseau sera de type réseau Perceptron, à une ou deux couches, avec un retour comme celui d'un réseau d'Hopfield afin de garder l'information de l'historique (ce qui assure un effet mémoire). Ici, ce retour est assurée par la donnée « états de santé SOH des batteries ». Le réseau comporte une couche cachée à 20 neurones ou deux couches cachées de 10 neurones chacune.

L'apprentissage du réseau de neurones se fera par rétropropagation (on parle de « back propagation ») du gradient de l'erreur, sur un set d'apprentissage. Le set d'apprentissage correspondra à des valeurs de données de batterie déjà connues ou, en variante, il sera issu d'un modèle mathématique.

Selon un premier exemple, dans le cas où la configuration d'avancement correspond à une phase d'accélération du véhicule automobile 1, la consigne de commande prescrit la fermeture du relais 60, 60a, 60b, 62, 62a, 62b, 64, 64a, 64b, 66, 66a, 66b associé à la batterie d'accumulateurs dont l'état de charge SOC est le plus élevé, et l'ouverture des autres relais, si les paramètres relatifs au niveau d'usure de la batterie concernée sont inférieurs à ceux des autres batteries d'accumulateurs. En particulier, la batterie d'accumulateurs associée au relais fermé est celle qui présente l'état de santé SOH le plus élevé par rapport aux autres batteries d'accumulateurs.

En pratique, la consigne de commande vise à identifier la batterie d'accumulateurs (qui alimentera le moteur électrique 3) pour laquelle un compromis est observé entre l'état de charge SOC de la batterie d'accumulateurs et la valeur des paramètres relatifs à son niveau d'usure. Par exemple, il est possible d'envisager que si la batterie d'accumulateurs 50, 52, 54, 56 dont l'état de charge SOC est le plus élevé correspond aussi à celle dont la valeur des paramètres relatifs à son niveau d'usure est la plus élevée, celle-ci ne sera pas utilisée pour alimenter le moteur électrique 3. Une autre des batteries d'accumulateurs 50, 52, 54, 56, dont la valeur des paramètres relatifs à son niveau d'usure est inférieure, sera préférentiellement utilisée.

Cela a l'avantage de permettre de préserver la capacité et l'autonomie des batteries en n'utilisant, pour l'alimentation du moteur électrique 3, que la ou les batteries les moins usées pour autant qu'elles soient suffisamment chargées.

Lorsque plusieurs batteries d'accumulateurs 50, 52, 54, 56 présentent des tensions à leurs bornes sensiblement égales, la consigne de commande prescrit la fermeture simultanée des relais 60, 60a, 60b, 62, 62a, 62b, 64, 64a, 64b, 66, 66a, 66b associés à chaque batterie d'accumulateurs 50, 52, 54, 56 concernée.

Dans les cas où l'unité d'alimentation 5 comprend un ou plusieurs convertisseurs de courant continu 70, 72, la consigne de commande prescrit également la fermeture simultanée des relais60, 60a, 60b, 62, 62a, 62b, 64, 64a, 64b, 66, 66a, 66b associés aux batteries d'accumulateurs correspondant aux conditions correspondant à la configuration d'avancement identifiée.

Si à l'étape E4, la configuration d'avancement déterminée correspond à une phase de décélération, la consigne de commande prescrit la fermeture du relais 60, 60a, 60b, 62, 62a, 62b, 64, 64a, 64b, 66, 66a, 66b associé à la batterie d'accumulateurs dont l'état de charge SOC est le plus faible, si les paramètres relatifs au niveau d'usure de la batterie d'accumulateurs concernée sont inférieurs à ceux des autres batteries d'accumulateurs. En particulier, la batterie d'accumulateurs associée au relais fermé est celle qui présente l'état de santé SOH le plus élevé par rapport aux autres batteries d'accumulateurs. Le choix de la batterie d'accumulateurs 50, 52, 54, 56 avec l'état de charge le plus faible permettra alors une charge de la batterie d'accumulateurs connectée lors de cette phase de freinage.

Ici aussi, la consigne de commande vise à identifier la batterie d'accumulateurs (qui alimentera le moteur électrique 3) pour laquelle un compromis est observé entre l'état de charge SOC de la batterie d'accumulateurs et la valeur des paramètres relatifs à son niveau d'usure.

Si la configuration d'avancement déterminée correspond à une phase d'arrêt du véhicule automobile 1 après usage de celui-ci, la consigne de commande correspond à une consigne de charge de la batterie d'accumulateurs 50, 52, 54, 56 dont l'état de charge SOC est le plus faible et pour laquelle les paramètres relatifs au niveau d'usure de la batterie d'accumulateurs concernée sont inférieurs à ceux des autres batteries d'accumulateurs. En d'autres termes, l'utilisateur est informé de la batterie d'accumulateurs à recharger avant d'utiliser à nouveau son véhicule.

La charge de la batterie d'accumulateurs peut être effectuée sur un réseau électrique extérieur, par exemple en utilisant le chargeur 6 ou en retirant la batterie concernée de l'unité d'alimentation 5 s'il s'agit d'une batterie auxiliaire 52, 54, 56.

Une fois la consigne de commande déterminée, le procédé se poursuit à l'étape E8. Lors de cette étape, le calculateur 10 pilote les relais 60, 62, 64, 66 sur la base de la consigne de commande déterminée à l'étape E6. A l'issue de cette étape, le moteur électrique 3 est donc alimenté par une ou plusieurs batteries d'accumulateurs 50, 52, 54, 56 de l'unité d'alimentation 5.

Comme le montre la figure 6, le procédé reprend ensuite à l'étape E2 afin d'alimenter de manière optimale le moteur électrique 3 lors de l'utilisation du véhicule automobile 1.

## Revendications

1. Procédé de gestion d'un réseau de batteries d'accumulateurs (50, 52, 54, 56) adaptées à alimenter en courant électrique un moteur (3) d'un véhicule automobile (1) à propulsion électrique, ledit réseau comprenant une première batterie d'accumulateurs (50, 52, 54, 56) et au moins une deuxième batterie d'accumulateurs (50, 52, 54, 56) connectées en parallèle, chaque batterie d'accumulateurs (50, 52, 54, 56) étant connectée au reste du réseau par l'intermédiaire d'un relais (60, 62, 64, 66) qui permet d'isoler ladite batterie d'accumulateurs (50, 52, 54, 56) des autres batteries d'accumulateurs (50, 52, 54, 56) et qui est piloté par un calculateur (10), ledit procédé comprenant des étapes de :
- acquisition pour chaque batterie d'accumulateurs (50, 52, 54, 56) d'un état de charge,
- détermination, par le calculateur (10), d'une consigne de commande de chaque relais (60, 62, 64, 66) en fonction des états de charge acquis, et
- pilotage desdits relais (60, 62, 64, 66) sur la base de chaque consigne de commande déterminée,
**caractérisé en ce que** :
- à l'étape d'acquisition, le calculateur (10) acquiert la valeur d'un premier paramètre relatif au niveau d'usure de chaque batterie d'accumulateurs (50, 52, 54, 56), et **en ce que**
- à l'étape de détermination, chaque consigne de commande est déterminée en fonction de la valeur dudit premier paramètre.

2. Procédé selon la revendication 1, dans lequel la détermination de la consigne de commande est mise en oeuvre par le calculateur (10) au moyen d'un réseau de neurones artificiels, en fournissant en entrée dudit réseau de neurones artificiels lesdits états de charge ainsi que la valeur du premier paramètre acquis, ladite consigne de commande étant obtenue en sortie dudit réseau de neurones artificiels.

3. Procédé selon la revendication 1 ou 2, dans lequel:
- à l'étape d'acquisition, le calculateur (10) acquiert la valeur d'au moins un second paramètre choisi parmi la tension aux bornes de chaque batterie d'accumulateurs (50, 52, 54, 56), la température de chaque batterie d'accumulateurs (50, 52, 54, 56) et une configuration d'avancement du véhicule automobile (1), et
- à l'étape de détermination, chaque consigne de commande est déterminée en fonction de la valeur de chaque second paramètre.

4. Procédé selon la revendication 3, dans lequel, le second paramètre étant la configuration d'avancement du véhicule automobile (1), lorsque la configuration d'avancement du véhicule automobile (1) correspond à une phase d'accélération dudit véhicule automobile (1), la consigne de commande prescrit la fermeture du relais (60, 62, 64, 66) associé à la batterie d'accumulateurs (50, 52, 54, 56) dont l'état de charge est le plus élevé et l'ouverture de chaque autre relais (50, 52, 54, 56), pour autant que le premier paramètre indique que le niveau d'usure de cette batterie d'accumulateurs (50, 52, 54, 56) est inférieur à celui de chaque autre batterie d'accumulateurs (50, 52, 54, 56).

5. Procédé selon à la revendication 3 ou 4, dans lequel, le second paramètre étant la configuration d'avancement du véhicule automobile (1), lorsque la configuration d'avancement du véhicule automobile (1) déterminée correspond à une phase de freinage dudit véhicule automobile (1), la consigne de commande prescrit la fermeture du relais (60, 62, 64, 66) associé à la batterie d'accumulateurs (50, 52, 54, 56) dont l'état de charge déterminé est le plus faible et l'ouverture de chaque autre relais (50, 52, 54, 56), pour autant que le premier paramètre indique que le niveau d'usure de cette batterie d'accumulateurs (50, 52, 54, 56) est inférieur à celui de chaque autre batterie d'accumulateurs (50, 52, 54, 56).

6. Procédé selon l'une quelconque des revendications 3 à 5, dans lequel la consigne de commande prescrit la fermeture des relais (50, 52, 54, 56) associés à chacune des deux batteries d'accumulateurs (50, 52, 54, 56) simultanément lorsque les tensions à leurs bornes sont sensiblement égales.

7. Procédé selon l'une quelconque des revendications 1 à 6, comprenant également, après usage du véhicule automobile (1), une étape de détermination, par le calculateur (10), d'une consigne de charge, sur un réseau électrique extérieur, de la batterie d'accumulateurs (50, 52, 54, 56) dont l'état de charge déterminé est le plus faible, pour autant que le premier paramètre indique que le niveau d'usure de cette batterie d'accumulateurs (50, 52, 54, 56) est inférieur à celui de chaque autre batterie d'accumulateurs (50, 52, 54, 56).

8. Unité d'alimentation (5) électrique d'un moteur (3) dans un véhicule automobile (1) à propulsion comprenant :
- une première batterie d'accumulateurs (50, 52, 54, 56),
- au moins une seconde batterie d'accumulateurs (50, 52, 54, 56),
- un calculateur (10) adapté à mettre en oeuvre le procédé de gestion du réseau de batteries d'accumulateurs (50, 52, 54, 56) selon l'une quelconque des revendications 1 à 7.

9. Unité d'alimentation (5) selon la revendication 8, dans lequel une seule des deux batteries d'accumulateurs (50, 52, 54, 56) est raccordée à un convertisseur de courant continu (70).

10. Unité d'alimentation (5) selon la revendication 8, dans lequel les deux batteries d'accumulateurs (50, 52, 54, 56) sont chacune raccordées à un convertisseur de courant continu (70, 72) distinct.

11. Unité d'alimentation (5) selon la revendication 8, dans lequel les deux batteries d'accumulateurs (50, 52, 54, 56) sont chacune raccordées à un unique convertisseur de courant continu (70, 72).

## Patentansprüche

1. Verfahren zur Verwaltung eines Netzwerks aus Akkumulatorenbatterien (50, 52, 54, 56), die dazu eingerichtet sind, einen Motor (3) eines Kraftfahrzeugs (1) mit elektrischem Antrieb mit elektrischem Strom zu versorgen, wobei das Netzwerk eine erste Akkumulatorenbatterie (50, 52, 54, 56) und mindestens eine zweite Akkumulatorenbatterie (50, 52, 54, 56) umfasst, die parallel geschaltet sind, wobei jede Akkumulatorenbatterie (50, 52, 54, 56) mit dem Rest des Netzwerks über ein Relais (60, 62, 64, 66) verbunden ist, welches ermöglicht, die Akkumulatorenbatterie (50, 52, 54, 56) von den anderen Akkumulatorenbatterien (50, 52, 54, 56) zu isolieren, und welches von einem Computer (10) gesteuert wird,
wobei das Verfahren Schritte umfasst:
- der Erfassung eines Ladezustands für jede Akkumulatorenbatterie (50, 52, 54, 56),
- der Bestimmung, durch den Computer (10), einer Steueranweisung für jedes Relais (60, 62, 64, 66) in Abhängigkeit von den erfassten Ladezuständen, und
- der Steuerung der Relais (60, 62, 64, 66) auf der Basis der jeweiligen bestimmten Steueranweisung,
**dadurch gekennzeichnet, dass**:
- im Schritt der Erfassung der Computer (10) den Wert eines ersten Parameters erfasst, der sich auf den Verschleißgrad jeder Akkumulatorenbatterie (50, 52, 54, 56) bezieht, und dadurch, dass
- im Schritt der Bestimmung jede Steueranweisung in Abhängigkeit vom Wert des ersten Parameters bestimmt wird.

2. Verfahren nach Anspruch 1, wobei die Bestimmung der Steueranweisung durch den Computer (10) mittels eines künstlichen neuronalen Netzes durchgeführt wird, indem am Eingang des künstlichen neuronalen Netzes die Ladezustände sowie der Wert des erfassten ersten Parameters eingegeben werden, wobei die Steueranweisung am Ausgang des künstlichen neuronalen Netzes erhalten wird.

3. Verfahren nach Anspruch 1 oder 2, wobei:
- im Schritt der Erfassung der Computer (10) den Wert mindestens eines zweiten Parameters erfasst, der aus der Spannung an den Klemmen jeder Akkumulatorenbatterie (50, 52, 54, 56), der Temperatur jeder Akkumulatorenbatterie (50, 52, 54, 56) und einer Fahrkonfiguration des Kraftfahrzeugs (1) ausgewählt ist, und
- im Schritt der Bestimmung jede Steueranweisung in Abhängigkeit vom Wert jedes zweiten Parameters bestimmt wird.

4. Verfahren nach Anspruch 3, wobei, wenn der zweite Parameter die Fahrkonfiguration des Kraftfahrzeugs (1) ist, wenn die Fahrkonfiguration des Kraftfahrzeugs (1) einer Beschleunigungsphase des Kraftfahrzeugs (1) entspricht, die Steueranweisung das Schließen des Relais (60, 62, 64, 66) vorschreibt, das der Akkumulatorenbatterie (50, 52, 54, 56) zugeordnet ist, deren Ladezustand der höchste ist, und das Öffnen jedes anderen Relais (50, 52, 54, 56), sofern der erste Parameter anzeigt, dass der Verschleißgrad dieser Akkumulatorenbatterie (50, 52, 54, 56) niedriger als derjenige jeder anderen Akkumulatorenbatterie (50, 52, 54, 56) ist.

5. Verfahren nach Anspruch 3 oder 4, wobei, wenn der zweite Parameter die Fahrkonfiguration des Kraftfahrzeugs (1) ist, wenn die bestimmte Fahrkonfiguration des Kraftfahrzeugs (1) einer Bremsphase des Kraftfahrzeugs (1) entspricht, die Steueranweisung das Schließen des Relais (60, 62, 64, 66) vorschreibt, das der Akkumulatorenbatterie (50, 52, 54, 56) zugeordnet ist, deren bestimmter Ladezustand der niedrigste ist, und das Öffnen jedes anderen Relais (50, 52, 54, 56), sofern der erste Parameter anzeigt, dass der Verschleißgrad dieser Akkumulatorenbatterie (50, 52, 54, 56) niedriger als derjenige jeder anderen Akkumulatorenbatterie (50, 52, 54, 56) ist.

6. Verfahren nach einem der Ansprüche 3 bis 5, wobei die Steueranweisung das gleichzeitige Schließen der Relais (50, 52, 54, 56) vorschreibt, die den zwei Akkumulatorenbatterien (50, 52, 54, 56) jeweils zugeordnet sind, wenn die Spannungen an ihren Klemmen im Wesentlichen gleich sind.

7. Verfahren nach einem der Ansprüche 1 bis 6, welches außerdem nach einer Benutzung des Kraftfahrzeugs (1) einen Schritt der Bestimmung, durch den Computer (10), einer Anweisung zum Laden der Akkumulatorenbatterie (50, 52, 54, 56), deren bestimmter Ladezustand der niedrigste ist, an einem externen Stromnetz umfasst, sofern der erste Parameter anzeigt, dass der Verschleißgrad dieser Akkumulatorenbatterie (50, 52, 54, 56) niedriger als derjenige jeder anderen Akkumulatorenbatterie (50, 52, 54, 56) ist.

8. Stromversorgungseinheit (5) eines Motors (3) in einem Kraftfahrzeug (1) mit elektrischem Antrieb, welche umfasst:
- eine erste Akkumulatorenbatterie (50, 52, 54, 56),
- mindestens eine zweite Akkumulatorenbatterie (50, 52, 54, 56),
- einen Computer (10), der dazu eingerichtet ist, das Verfahren zur Verwaltung des Netzwerks aus Akkumulatorenbatterien (50, 52, 54, 56) nach einem der Ansprüche 1 bis 7 durchzuführen.

9. Stromversorgungseinheit (5) nach Anspruch 8, wobei nur eine der zwei Akkumulatorenbatterien (50, 52, 54, 56) an einen Gleichspannungswandler (70) angeschlossen ist.

10. Stromversorgungseinheit (5) nach Anspruch 8, wobei die zwei Akkumulatorenbatterien (50, 52, 54, 56) jeweils an einen separaten Gleichspannungswandler (70, 72) angeschlossen sind.

11. Stromversorgungseinheit (5) nach Anspruch 8, wobei die zwei Akkumulatorenbatterien (50, 52, 54, 56) jeweils an einen einzelnen Gleichspannungswandler (70, 72) angeschlossen sind.

## Claims

1. Method for managing a network of storage batteries (50, 52, 54, 56) suitable for supplying electric current to an engine (3) of an electrically propelled motor vehicle (1), said network comprising a first storage battery (50, 52, 54, 56) and at least a second storage battery (50, 52, 54, 56) connected in parallel, each storage battery (50, 52, 54, 56) being connected to the rest of the network via a relay (60, 62, 64, 66) which enables said storage battery (50, 52, 54, 56) to be isolated from the other storage batteries (50, 52, 54, 56), and which is controlled by a computer (10), said method comprising the steps of:
- acquiring a state of charge for each storage battery (50, 52, 54, 56),
- determining, by the computer (10), a control setpoint for each relay (60, 62, 64, 66) on the basis of the acquired states of charge, and
- controlling said relays (60, 62, 64, 66) on the basis of each determined control setpoint,
**characterized in that**:
- in the acquisition step, the computer (10) acquires the value of a first parameter relating to the level of wear of each storage battery (50, 52, 54, 56), and **in that**
- in the determination step, each control setpoint is determined on the basis of the value of said first parameter.

2. Method according to Claim 1, wherein the determination of the control setpoint is implemented by the computer (10) using an artificial neural network, by supplying to the input of said artificial neural network said states of charge, together with the value of the first acquired parameter, said control setpoint being obtained at the output of said artificial neural network.

3. Method according to Claim 1 or 2, wherein:
- in the acquisition step, the computer (10) acquires the value of at least a second parameter chosen from among the voltage at the terminals of each storage battery (50, 52, 54, 56), the temperature of each storage battery (50, 52, 54, 56), and a configuration of advance of the motor vehicle (1), and
- in the determination step, each control setpoint is determined on the basis of the value of each second parameter.

4. Method according to Claim 3, wherein, the second parameter being the configuration of advance of the motor vehicle (1), when the configuration of advance of the motor vehicle (1) corresponds to an acceleration phase of said motor vehicle (1), the control setpoint specifies the closure of the relay (60, 62, 64, 66) associated with the storage battery (50, 52, 54, 56) whose state of charge is highest and the opening of every other relay (50, 52, 54, 56), provided that the first parameter indicates that the level of wear of this storage battery (50, 52, 54, 56) is lower than that of every other storage battery (50, 52, 54, 56).

5. Method according to Claim 3 or 4, wherein, the second parameter being the configuration of advance of the motor vehicle (1), when the determined configuration of advance of the motor vehicle (1) corresponds to a braking phase of said motor vehicle (1), the control setpoint specifies the closure of the relay (60, 62, 64, 66) associated with the storage battery (50, 52, 54, 56) whose determined state of charge is lowest and the opening of every other relay (50, 52, 54, 56), provided that the first parameter indicates that the level of wear of this storage battery (50, 52, 54, 56) is lower than that of every other storage battery (50, 52, 54, 56).

6. Method according to any one of Claims 3 to 5, wherein the control setpoint specifies the closure of the relays (50, 52, 54, 56) associated with each of the two storage batteries (50, 52, 54, 56) simultaneously when the voltages at their terminals are substantially equal.

7. Method according to any one of Claims 1 to 6, further comprising, after the use of the motor vehicle (1), a step of determination by the computer (10) of an instruction to charge, in an external power network, the storage battery (50, 52, 54, 56) whose determined state of charge is lowest, provided that the first parameter indicates that the level of wear of this storage battery (50, 52, 54, 56) is lower than that of every other storage battery (50, 52, 54, 56).

8. Power supply unit (5) for an engine (3) in a propelled motor vehicle (1), comprising:
- a first storage battery (50, 52, 54, 56),
- at least a second storage battery (50, 52, 54, 56),
- a computer (10) suitable for implementing the method for managing the network of storage batteries (50, 52, 54, 56), according to any one of Claims 1 to 7.

9. Power supply unit (5) according to Claim 8, wherein only one of the two storage batteries (50, 52, 54, 56) is connected to a DC converter (70).

10. Power supply unit (5) according to Claim 8, wherein each of the two storage batteries (50, 52, 54, 56) is connected to a separate DC converter (70, 72).

11. Power supply unit (5) according to Claim 8, wherein each of the two storage batteries (50, 52, 54, 56) is connected to a single DC converter (70, 72).
